# EUROPEAN PATENT APPLICATION

(11) **EP 0 955 324 A1**
(43) Date of publication of application: **10.11.1999**
(21) Application number: 99108196.9
(22) Date of filing: 27.04.1999
(51) Int. Cl.: C08F 279/02, C08F 2/22

(54) **Emulsifier-free carboxylated nitrile rubber latex**

(30) Priority: 05.05.1998 US 72840
(71) Applicant: THE GOODYEAR TIRE & RUBBER COMPANY, Akron, Ohio 44316-0001 (US)
(72) Inventor: Muller, Pascale Francine Jeanne, 78830 Bullion (FR)
(74) Representative: Leitz, Paul

(57) **Abstract**

Carboxylated nitrile rubber latices are used in a wide variety of industrial applications, such as in the manufacture of gloves, non-woven fabrics, masking tape and an array of other products. Carboxylated nitrile rubbers are conventionally synthesized by emulsion polymerization. The need for an emulsifier in the synthesis of carboxylated nitrile rubber can be eliminated by practicing the process of this invention. The present invention more specifically discloses a process for the synthesis of carboxylated nitrile rubber latex which comprises the steps of (1) initiating the terpolymerization of 1,3-butadiene, acrylonitrile and methacrylic acid in an aqueous polymerization medium by the addition of potassium persulfate and a potassium persulfate co-initiator, wherein the terpolymerization is initiated in a reactor that is at least 60 percent full, (2) allowing the terpolymerization to proceed at a temperature which is within the range of about 25°C to about 80°C until a solids content of at least about 20 percent is attained to produce a seed polymer latex, (3) adding additional 1,3-butadiene, acrylonitrile and potassium persulfate to the seed polymer latex over a period of at least about 1 hour to produce a second polymerization medium and (4) allowing the polymerization to continue in the second polymerization medium for at least 0.5 hour to produce the carboxylated nitrile rubber latex.

## Description

### Field of the Invention

This invention relates generally to the synthesis of carboxylated nitrile rubber latex. More specifically, this invention relates to the production of emulsifier-free carboxylated nitrile rubber latex.

### Background of the Invention

Carboxylated nitrile rubber latices are used in a wide variety of industrial applications. For example, carboxylated nitrile rubber latices are widely used in the manufacture of gloves, non-woven fabrics, masking tape, gaskets, seals, adhesives, fiber binders, protective and decorative coatings, foams, paper coatings, carpet and upholstery, concrete and bitumen modifiers, thread and textile modifiers and an array of other products. Carboxylated nitrile rubbers are conventionally synthesized by emulsion polymerization during which acrylonitrile, methacrylic acid and 1,3-butadiene are terpolymerized in an aqueous emulsion in the presence of an emulsifier.

### Summary of the Invention

By utilizing the process of this invention, emulsifier-free carboxylated nitrile rubber latex can be synthesized. This offers numerous advantages. For instance, rubber products made with such emulsifier-free latex not will contain residual emulsifier. This is a major advantage in some products; such as, gloves where residual emulsifier can cause allergic reactions. The absence of emulsifier is also advantageous from an environmental standpoint since residual emulsifiers are not present in wash water utilized in conjunction with the latex. Products made with the emulsifier-free latex, such as non-woven fabric and masking tape, also offer the advantage of having a higher level of resistance to water.

This invention more specifically discloses a process for the synthesis of carboxylated nitrile rubber latex which comprises the steps of (1) initiating the terpolymerization of 1,3-butadiene, acrylonitrile and methacrylic acid in an aqueous polymerization medium by the addition of potassium persulfate and a potassium persulfate co-initiator, wherein the terpolymerization is initiated in a reactor that is at least 60 percent full, (2) allowing the terpolymerization to proceed at a temperature which is within the range of about 25°C to about 80°C until a solids content of at least about 20 percent is attained to produce a seed polymer latex, (3) adding additional 1,3-butadiene, acrylonitrile and potassium persulfate to the seed polymer latex over a period of at least about 1 hour to produce a second polymerization medium and (4) allowing the polymerization to continue in the second polymerization medium for at least 0.5 hour to produce the carboxylated nitrile rubber latex.

In applications where latices having a relatively low solids content are needed, it is possible to eliminate the third and fourth steps of the process of this invention. Thus, this invention further discloses a process for the synthesis of carboxylated nitrile rubber latex which comprises the steps of (1) initiating the terpolymerization of 1,3-butadiene, acrylonitrile and methacrylic acid in an aqueous polymerization medium by the addition of potassium persulfate and a potassium persulfate co-initiator, wherein the terpolymerization is initiated in a reactor that is at least 60 percent full and (2) allowing the terpolymerization to proceed at a temperature which is within the range of about 25°C to about 80°C until a solids content of at least about 20 percent is attained to produce said carboxylated nitrile rubber latex.

### Detailed Description of the Invention

The emulsifier-free carboxylated nitrile rubber latex of this invention is synthesized by utilizing a novel polymerization process. In this process, methacrylic acid, acrylonitrile and 1,3-butadiene are terpolymerized in an aqueous emulsion under free radical polymerization conditions. The carboxylated nitrile rubber made accordingly contains repeat units which are derived from 1,3-butadiene monomer, methacrylic acid monomer and acrylonitrile monomer. The repeat units which are derived from 1,3-butadiene monomer, methacrylic acid monomer and acrylonitrile monomer differ from the monomers from which they were derived in that a double bond is consumed by the polymerization.

In the first step of the process of this invention, the terpolymerization of 1,3-butadiene monomer, acrylonitrile monomer and methacrylic acid monomer is initiated in an aqueous medium. It is critical for this step to be carried out in a polymerization reactor that is at least 60 percent full. In other words, at least 60 percent of the volume of the reactor must be filled with an aqueous liquid mixture of water and monomers that are dispersed and/or dissolved in the water. Thus, at least 60 percent of the reactor will be filled with liquid. It is preferred for the reactor to be at least 65 percent full and it is more preferred for the reactor to be at least 70 percent full.

It is also critical for the polymerization to be initiated with potassium persulfate and a potassium persulfate co-initiator. The potassium persulfate co-initiator should be a co-initiator that is active under acidic conditions. Sodium metabisulfite is a representative example of a highly preferred potassium persulfate co-initiator. In cases where sodium metabisulfite is used as the co-initiator, it will typically be employed at a ratio to potassium persulfate of about 0.10:1 to about 0.15:1.

After the terpolymerization is initiated, it is allowed to proceed in the second step of the process of this invention at a temperature which is within the range of about 25°C to about 80°C until a monomer conversion of at least about 20 percent is realized. During this step of the process, the liquid aqueous phase must continue to maintain at least 60 percent of the total reactor capacity. It is preferred for this terpolymerization to be carried out while the reactor is at least 65 percent full and it is most preferred for this terpolymerization to be carried out while the reactor is at least 70 percent full.

The terpolymerization carried out in the second step of the process of this invention will preferably be conducted at a temperature which is within the range of about 40°C to about 70°C. It is typically more preferred for the terpolymerization carried out in the second step of the process of this invention to be conducted at a temperature which is within the range of about 45°C to about 65°C. The terpolymerization will preferably be carried out until a solids content which is within the range of about 25 percent to about 32 percent is attained. It is typically more preferred to carry out the terpolymerization until a solids content which is within the range of about 27 percent to 31 percent is attained.

The aqueous polymerization medium will typically contain at least about 10 phm (parts per hundred parts of monomer based upon the initial polymerization step) of acrylonitrile and at least 4 phm of methacrylic acid (with the balance of monomer being 1,3-butadiene). It is typically preferred for the aqueous polymerization medium to contain from about 20 weight percent to about 40 weight percent acrylonitrile, 5 weight percent to 9 weight percent methacrylic acid and about 51 to about 75 weight percent 1,3-butadiene. It is typically more preferred for the aqueous polymerization medium to contain from about 30 weight percent to about 35 weight percent acrylonitrile, 6 weight percent to 8 weight percent methacrylic acid and about 57 to about 64 weight percent 1,3-butadiene.

The second polymerization medium will normally contain from about 20 weight percent to 53 weight percent monomers, based upon the total weight of monomers and water in the aqueous polymerization medium. It is typically preferred for the aqueous polymerization medium to contain from about 25 weight percent to about 50 weight percent monomers with it being most preferred for the aqueous polymerization medium to contain 40 weight percent to 45 weight percent monomers.

After the desired conversion is attained in the initial polymerization step, additional initiator, 1,3-butadiene and acrylonitrile are added to the seed polymer latex (in cases where it is desired to further increase the solids content of the latex). This can be accomplished by simply adding the additional initiator and the additional monomer to the seed polymer latex. However, in cases where a high final solids content is desired, it is generally necessary to transfer the seed polymer latex to a different polymerization reactor. This is, of course, because the initial reactor is at least 60 percent full and may not have the required capacity to accommodate the additional quantity of monomers which are required to attain the desired final solids content. In some cases, it will be convenient to split the seed polymer latex into smaller batches. These batches should be small enough for available polymerization reactors to hold along with the additional required amounts of initiator and monomers.

Generally, up to about 56 percent of she total amount of 1,3-butadiene monomer and acrylonitrile monomer charged can be fed into the seed polymer latex in the third step of the process of this invention (from 44 percent to 100 percent of the 1,3-butadiene monomer and acrylonitrile monomer are polymerized in making the seed polymer latex in the second step of the process of this invention). It is typically preferred for 30 percent to 50 percent of the total amount of 1,3-butadiene monomer and acrylonitrile monomer charged to be fed into the seed polymer latex in the third step of the process of this invention. It is typically most preferred for about 45 percent to about 50 percent of the total amount of 1,3-butadiene monomer and acrylonitrile monomer charged to be fed into the seed polymer latex in the third step of the process of this invention. Additional methacrylic acid will typically not be charged into the seed polymer latex in the third step of the process of this invention (100 percent of the methacrylic acid is charged into the aqueous medium in the first step of the process of this invention).

The monomer composition charged into the seed polymer latex will typically be comprised of 10 weight percent to 60 weight percent acrylonitrile and 40 weight percent to 90 weight percent 1,3-butadiene. This monomer charge will preferably be comprised of 20 weight percent to 45 weight percent acrylonitrile and 55 weight percent to 80 weight percent 1,3-butadiene. This monomer charge will preferably be comprised of 30 weight percent to 40 weight percent acrylonitrile and 60 weight percent to 70 weight percent 1,3-butadiene.

The ratio of bound monomers in the carboxylated nitrile rubber can vary from the monomer charge ratios utilized in the synthesis of the polymer due to differences in the polymerization rates of the monomers. Thus, the carboxylated nitrile rubber can have a different ratio of repeat units which are derived from the various monomers than was utilized in the monomer charge in cases where the monomer conversion is less than 100 percent. The ratio of monomers utilized in the charge composition can vary and will, of course, vary with the ratio of bound monomers desired for the carboxylated nitrile rubber being synthesized.

The additional monomers and additional initiator will typically be added to the seed polymer latex continuously over a period of at least about 1 hour. It is normally preferred to continuously add the additional monomers and additional initiator to the seed polymer latex over a period of at least about 2 hours. It is typically most preferred to continuously add the additional monomers and additional initiator to the seed polymer latex over a period of at least about 3 hours. After the additional monomers and initiator have been charged, it is generally advantageous to allow the polymerization to continue for a period of at least about 0.5 hour.

A mercaptan, such as t-dodecylmercaptan, can be added to the first or second stage of the polymerization as a chain transfer agent to achieve the mechanical properties that are necessary for attaining the final physical properties needed in certain applications, such as in gloves, non-woven fabrics and masking tape. The amount of mercaptan added in the first stage will typically be within the range of 0 to about 0.5 phm and the amount added in the second stage will typically be within the range of 0 to about 1 phm. It is normally preferred to utilize from 0 to about 0.4 phm of the mercaptan in the first stage and 0 to 0.8 phm of mercaptan in the second stage.

After the desired degree of monomer conversion and solids content has been attained, a conventional shortstopping agent, such as hydroquinone, can be added to the polymerization medium to end the polymerization. However, the polymerization will typically be allowed to continue until a high level conversion has been achieved. In most cases, the monomer conversion reached will be at least about 75 percent with monomer conversions of at least about 80 percent being preferred.

After the polymerization has been shortstopped, it is generally desirable to strip unreacted monomers from the emulsion. This can be accomplished using conventional techniques such as steam-stripping. After any stripping operations have been completed, the antioxidant can be added to the nitrile rubber containing emulsion to produce a stabilized carboxylated nitrile rubber latex.

Virtually any type of antioxidant can be utilized for this purpose. For instance, any antioxidant can be used which is capable of rendering the polymer less susceptible to oxidative attack by chemically interrupting the autoxidation process by which the polymer is oxidatively degraded. More specifically, the antioxidant can be a chain-breaking antioxidant, a peroxide-decomposing antioxidant, an ultra-violet screening agent, a triplet quencher or a metal deactivator.

Normally, from about 0.25 phm to about 3 phm of the antioxidant will be added to provide the carboxylated nitrile rubber latex with the desired degree of stability. It is generally preferred for about 0.5 phm to 2 phm of the antioxidant to be added in step (1). In most cases, it is more preferred for the antioxidant to be present at a level which is within the range of about 1 phm to about 1.5 phm.

The carboxylated nitrile rubber latices produced by the process of the present invention can be used to produce numerous finished products. For example, it is envisioned that these rubbers may be used for traditional applications, such as the manufacture of gloves, non-woven fabrics, masking tape, gaskets, seals, adhesives, fiber binders, protective and decorative coatings, foams, paper coatings, carpet and upholstery, concrete and bitumen modifiers, thread and textile modifiers. In addition, more recent applications such as protein immobilizers, electronic applications, such as photoresists for circuit boards, in batteries, conductive paints, and as compounds in molecular electronic devices. The nitrile rubber is typically cured in the processes used in manufacturing these products.

The practice of this invention is further illustrated by the following example which is intended to be representative rather than restrictive of the scope of the subject invention. Unless indicated otherwise, all parts and percentages are given by weight.

### Example 1

In this experiment, a carboxylated nitrile rubber latex was made by an emulsifier-free process. In the procedure utilized, 2683 grams of water, 1.96 grams of sodium dodecylsulfate and 2 grams of sodium naphthalene sulfonate were initially charged into a polymerization reactor having a capacity of 5 liters. The reactor was previously set to a temperature of 50°C and the stirring speed was set at 250 rpm. When the aqueous solution in the reactor reached a temperature of 50°C, then 360 grams of acrylonitrile and 80 grams of methacrylic acid were charged into the reactor. Then, 0.96 grams of sodium metabisulfite was charged into the reactor. After the sodium metabisulfite had been charged into the reactor, 652 grams of 1,3-butadiene was fed into the reactor. Then, 154 grams of a 5 weight percent solution of potassium persulfate was charged into the reactor.

After 1.5 hours of polymerization time, the latex had reached a solids content of 9-10 percent and the reactor temperature was set at 55°C. After an additional 3.5 hours of polymerization time (5 hours tonal polymerization time), the latex had reached a solids content of 25 percent and the reactor temperature was further increased to 60°C. After an additional 1.5 hours of polymerization time (6.5 hours total polymerization time), the latex had reached a solids content of 27 percent and the reactor temperature was further increased to 63°C. After 3 additional hours of polymerization time (9.5 hours total polymerization time), the latex had reached a theoretical solids content of 29 percent. This latex could, of course, be used in commercial applications where a solids content of only 29 percent is acceptable. However, in this experiment, this latex was used as the seed polymer in a subsequent polymerization to further increase the solids content of the latex.

In the subsequent polymerization, 3085 grams of the seed polymer latex was charged into a polymerization reactor having a capacity of 5 liters. The reactor temperature had previously been set to 55°C and the stirring speed was set at 250 rpm. Then, 144 grams of a 10 weight percent solution of ammonia was charged into the reactor with neutralization occurring during the time that the latex heated to a temperature of 55°C. After the 55°C was reached, 258 grams of acrylonitrile, 469 grams of 1,3-butadiene and 120 grams of a 5 weight percent solution of potassium persulfate were continuously charged into the reactor over a period of 3 hours. At the end of the addition period (after 3 hours), the latex had reached a solids content of 34-36 percent. After an additional 0.5 hour of polymerization time, the temperature was increased to 60°C and, 1 hour after that, the temperature was again increased to 63°C. Then, the polymerization was allowed to continue at 63°C for an additional 3 hours.

While certain representative embodiments and details have been shown for the purpose of illustrating the subject invention, it will be apparent to those skilled in this art that various changes and modifications can be made without departing from the scope of the present invention.

## Claims

**1.** A process for the synthesis of carboxylated nitrile rubber latex which is characterized by the steps of (1) initiating the terpolymerization of 1,3-butadiene, acrylonitrile and methacrylic acid in an aqueous polymerization medium by the addition of potassium persulfate and a potassium persulfate co-initiator, wherein the terpolymerization is initiated in a reactor that is at least 60 percent full, (2) allowing the terpolymerization to proceed at a temperature which is within the range of 25°C to 80°C until a solids content of at least 20 percent is attained to produce a seed polymer latex, (3) adding additional 1,3-butadiene, acrylonitrile and potassium persulfate to the seed polymer latex over a period of at least 1 hour to produce a second polymerization medium and (4) allowing the polymerization to continue in the second polymerization medium for at least 0.5 hour to produce the carboxylated nitrile rubber latex.

**2.** A process as specified in claim 1 characterized in that at least 10 phm of acrylonitrile and at least 4 phm of methacrylic acid are present in the terpolymerization of step (2); wherein at least 10 phm of acrylonitrile is added to the seed polymer latex in step (3); and wherein the reactor is at least 60 percent full during the terpolymerization of step (2).

**3.** A process as specified in claim 1 or 2 characterized in that the reactor is at least 65 percent full during step (1) and step (2); wherein the potassium persulfate co-initiator is sodium metabisulfite; wherein 20 phm to 40 phm of acrylonitrile, 5 to 9 phm of methacrylic acid and 51 phm to 75 phm of 1,3-butadiene are terpolymerized in step (2); and wherein 20 phm to 45 phm of acrylonitrile are added to the seed polymer latex in step (3).

**4.** A process as specified in claim 1, 2, or 3 characterized in that the polymerization of steps (2), (3) and (4) is carried out at a temperature which is within the range of 40°C to 70°C; wherein a solids content which is within the range of 25 percent to 32 percent is attained in step (2); and wherein the reactor is at least 70 percent full during step (1) and step (2).

**5.** A process as specified in any of the preceding claims characterized in that 30 phm to 35 phm of acrylonitrile, 6 to 8 phm of methacrylic acid and 57 phm to 64 phm of 1,3-butadiene are terpolymerized in step (2).

**6.** A process as specified in any of the preceding claims characterized in that 30 phm to 40 phm of acrylonitrile are added to the seed polymer latex in step (3)

**7.** A process as specified in any of the preceding claims characterized in that the polymerization of steps (2), (3) and (4) is carried out at a temperature which is within the range of 45°C to 65°C.

**9.** A process as specified in any of the preceding claims characterized in that a solids content which is within the range of 27 percent to 31 percent is attained in step (2).

**10.** A carboxylated nitrile rubber latex which is characterized by being made by the process specified in any of the preceding claims.
